# EUROPEAN PATENT SPECIFICATION

(11) **EP 3 030 047 B1**
(45) Date of publication and mention of the grant of the patent: **02.08.2017**
(21) Application number: 15169724.0
(22) Date of filing: 28.05.2015
(51) Int. Cl.: H05B 6/64

(54) **OVER-THE-RANGE MICROWAVE OVEN WITH AN INTEGRATED DUCT MODULE**
OVER-THE-RANGE-MIKROWELLENOFEN MIT INTEGRIERTEM LEITUNGSMODUL
FOUR À MICRO-ONDES À HOTTE INTÉGRÉE AVEC UN MODULE DE CONDUIT INTÉGRÉ

(30) Priority: 05.12.2014 KR 20140174471
(43) Date of publication of application: 08.06.2016
(73) Proprietor: Dongbu Daewoo Electronics Corporation, Seoul 135-523 (KR)
(72) Inventor: IMM, Jun Hyuk, 135-523 Seoul (KR); LEE, Jong Jin, 135-523 Seoul (KR)
(74) Representative: Rau, Schneck & Hübner Patentanwälte Rechtsanwälte PartGmbB

(56) References cited:
- EP-A2- 1 220 577
- KR-A- 20130 036 415
- US-A1- 2008 156 793

## Description

### CROSS-REFERENCE TO RELATED APPLICATION

This application claims benefit and priority to Korean Patent Application No. 10-2014-0174471, filed on December 5, 2014, with the Korean Intellectual Property Office.

### TECHNICAL FIELD

Embodiments of the present disclosure relate to over-the-range microwave ovens, and more particularly, to the layout of electrical components associated with the ventilation mechanisms on over-the-range microwave ovens.

### BACKGROUND

In general, an over-the-range microwave oven refers to a microwave oven equipped with a venting system for exhauting air or fumes during cooking. An over-the-range microwave oven is usually mounted above a gas or electric range. Such a microwave oven is known from KR 2013 0036415 A, which document discloses the features of the preamble of claim 1.

An over-the-range microwave oven combines a duct unit for discharging air and a cooking unit. Typically, the duct unit is associated with a plurality of electrical componentes, such as a power source, a running capacitor, a noise filter, a fuse, a humidity sensor, and the like. Conventionally, these components are spaced apart and distributed in different locations within the oven, which inevitably require long wires for electric connections.

The distributed design of the duct units make the oven interior configurations complicated, contributing to lengthy and cumbersome installation and assembling processes and thus high manufacturing cost.

### SUMMARY

The object of the present invention is directed to reducing assembly tolerance and manufacturing cost for over-the-range ovens, to improving space usage efficiency, and to reducing the overall size of the ovens.
this object is achieved by the features of the characterising part of claim 1 providing for an over-the-range microwave oven design including: an exterior housing; a cooking unit which is disposed in the housing; a duct unit which is disposed in the housing; a first panel forming a bottom wall of the duct unit; a pair of second panels forming both lateral side surfaces of the duct unit; and a duct module disposed on the first panel.

The duct unit includes an upper duct unit disposed between the housing and the cooking unit and located on an upper side of the cooking unit. The second panels are disposed between the first panel and the housing and have an increasingly smaller gap along the air flow. The duct module is disposed outside the pair of second panels.

A third panel is disposed in the rear of the pair of second panels and may has an air inlet hole.

The pair of second panels includes: a pair of first horizontal portions disposed on both sides of the third panel and in parallel with each other; a pair of inclined portions extending from the pair of first horizontal portions and has a gradually decreased gap; and a pair of second horizontal portions extending from the pair of inclined portions and in parallel to each other.

Moreover, the duct module integrates: a power source unit disposed on the first panel outside one of the first horizontal portions; a running capacitor disposed on the first panel outside one of the inclined portions; a noise filter disposed on the first panel outside one of the second horizontal portions; and a fuse disposed on the first panel outside the other first horizontal portion.

Moreover, the duct module may preferably include a humidity sensor disposed on the first panel outside the other inclined portion and the other second horizontal portion.

According to another preferred embodiment, the over-the-range microwave oven may further include: a fourth panel which is disposed on the first panel. A symmetric region is defined by the combination of the fourth panel, the other inclined portion, and the other second horizontal portion. The humidity sensor is disposed in the defined region.

The over-the-range microwave oven may further include an air discharge unit disposed between the third panel and a rear surface of the housing and which allows air to flow to the duct unit.

The air discharge unit in a further preferred embodiment may include an air discharge motor, and one or more impellers. The third panel includes a first inlet hole and a second inlet hole. A first impeller is disposed on one side of the air discharge motor, allowing air to flow into the first inlet hole. A second impeller is disposed on the other side of the air discharge motor, allowing air to flow into the second inlet hole.

The present disclosure improves ventilation efficiency and air flow efficiency by improving the duct flow path. The duct module integrates the associated electrical components in a compact manner, which improves space usage efficiency of the oven, reduces assembly tolerance, improves manufacturing productivity, improves durability, and facilitates development of compact style over-the-range ovens.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

FIG. 1 illustrates an exemplary over-the-range microwave oven according to an embodiment of the present disclosure in which an upper housing and a lateral side housing are absent.
FIG. 2 illustrates a top view of FIG. 1.
FIG. 3 illustrates an exemplary first panel according to an embodiment of the present disclosure when viewed from the lower side of the first panel.
FIG. 4 illustrates a perspective view of the first panel in FIG. 3 when viewed from the lower side of the first panel.

### DETAILED DESCRIPTION

In the following detailed description, reference is made to the accompanying drawings, which forms a part hereof. The illustrative embodiments described in the detailed description, drawing, and claims are not meant to be limiting.

Hereinafter, an exemplary embodiment of the present disclosure will be described in detail with reference to the accompanying drawings.

Unless particularly defined otherwise, all terms used in the present specification are the same as general meanings of the terms understood by those skilled in the art, and if the terms used in the present specification conflict with general meanings of the corresponding terms, the meanings of the terms comply with the meanings defined in the present specification.

However, the present disclosure, which is disclosed below, is intended to merely describe the exemplary embodiment of the present disclosure, but is not intended to limit the scope of the present disclosure, and like reference numerals designate like elements throughout the specification.

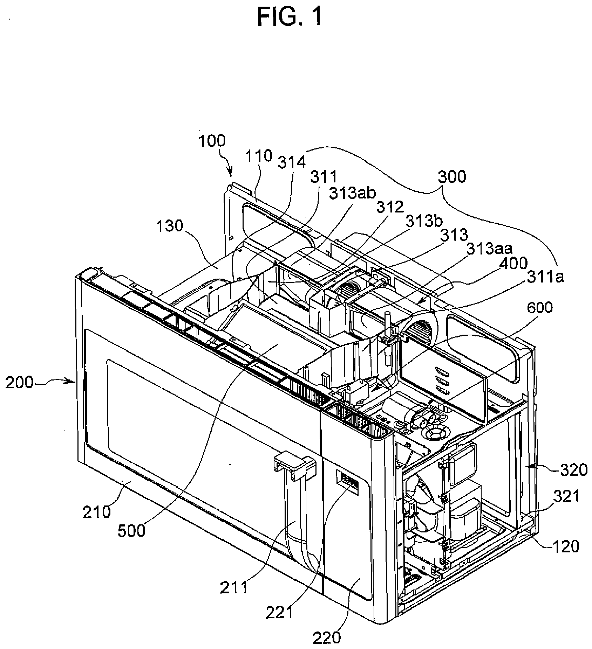

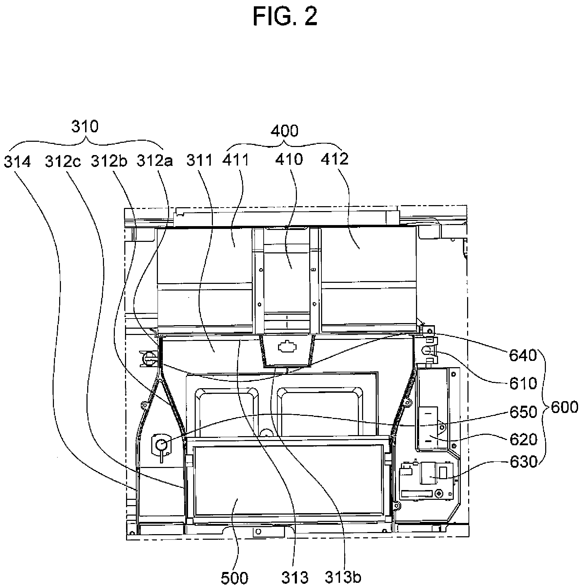

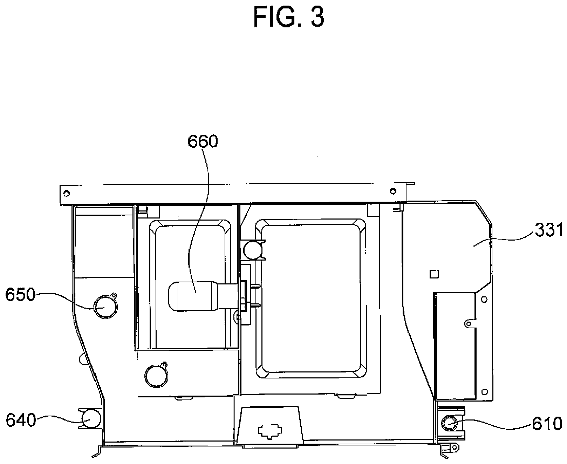

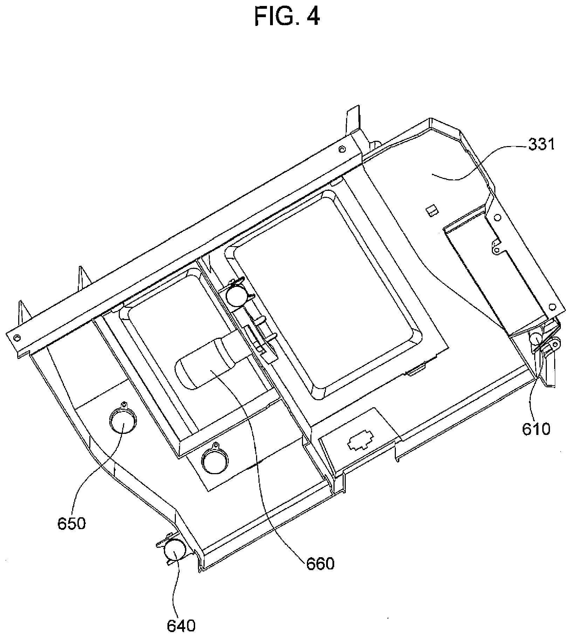

FIG. 1 illustrates an exemplary over-the-range microwave oven according to an embodiment of the present disclosure in which an upper housing and a lateral side housing are absent. FIG. 2 illustrates a top view of FIG. 1. FIG. 3 illustrates an exemplary first panel according to an exemplary embodiment of the present disclosure when viewed from the lower side thereof. FIG. 4 illustrates a perspective view of the first panel in FIG. 3 when viewed from the lower side thereof.

Referring to FIGs. 1 and 2, the microwave oven includes a housing 100, a cooking unit 200, a duct unit 300, an air discharge unit 400, and a duct module 600, and a filter unit 500.

The housing 100 defines the exterior of the over-the-range microwave oven, and may be made of metal or non-metal. The housing 100 includes an upper housing and a lateral side housing, which are not illustrated, and a rear housing 110 and a lower housing 120. The respective housing members may be integrally formed or may be detachably coupled to each other.

The housing 100 may further include a partition wall 130 that vertically partitions the interior of the housing 100 into the cooking unit 200 and the duct unit 300. The partition wall 130 may be formed integrally with the housing 100, or may be fastened to the housing 100, e.g., by bolting.

The housing 100 may be formed as an outer wall of the duct unit 300 as described below.

The cooking unit 200 is disposed in the housing 100, and may include a cooking chamber and an electric equipment chamber.

The door 210 is disposed in the front of the cooking chamber. The door 210 may be hingedly coupled to the housing 100. A handle 211 may be disposed on the door 210 which allows a user to easily open and close the door 210. In addition, in order to allow the user to easily view the interior of the cooking chamber, the door 210 may further include a transparent window 212, e.g., made of tempered glass, etc.

The cooking unit 200 may include a control panel 220 disposed on one side of the door 210. The control panel 220 may include user input mechanisms (such as buttons, a touch panel, or a dial) to receive user commands to control the cooking unit 200. The control panel 220 may include a display unit 221 for presenting information to users related to the operations of the over-the-range microwave oven.

The control panel 220 may also include input mechanisms (e.g., buttons, a touch panel, or a dial) for users to control the duct unit 300 as described below.

The duct unit 300 may be disposed between the housing 100 and the cooking unit 200 and forms an air flow path. In this example, the duct unit 300 is divided into an upper duct unit 300 and a lateral side duct unit 320.

The lateral side duct unit 320 may be disposed between the cooking unit 200 and the lateral side housing (not illustrated) or between the control panel 220 and the lateral side housing (not illustrated). In this example, the housing 100 serves as an outer wall of the duct unit 300.

Here, the lateral side duct unit 320 includes a first inlet port 321 having an opening at the lower housing 120 for accepting air from the outside of the oven. The lateral side duct unit 320 also guides air flowing from the first inlet port 321 to the upper duct unit 310 as described below. A plurality of first inlet ports 321 may be formed.

Moreover, the upper duct unit 310 may be disposed on an upper side of the cooking unit 200, and may include a first panel 311, second panels 312, and/or a third panel 313. By use of the upper duct unit 310, an air discharge flow path (or the exhaust path) from the rear side toward the front side is formed. Thus, a range hood and an over-the-range microwave oven according to the present disclosure may advantageously reduce turbulent air flows, electric power consumption, and noise level.

The first panel 311 is disposed inside the housing 100 and forms the bottom wall of the upper duct unit. The first panel 311 is disposed above the partition wall 130. In addition, the first panel 311 may be integrally formed as an upper surface of the partition wall 130.

In addition, the first panel 311 includes second inlet ports 311a in the back, through which air flows from the lateral side duct unit 320 into the upper duct unit 300. The second inlet ports 311 a may be respectively formed on two sides of the back of the first panel 311 and correspond to a first impeller 411 and a second impeller 412 which are described below.

The first panel 311 can be made of metal or plastic, for example.

Two second panels 312 are disposed as a pair between the first panel 311 and the housing 100 and form both lateral side surfaces of the upper duct unit, thereby partitioning the interior of the upper duct unit 310.

The pair of second panels 312 may be configured such that the gap therebetween gradually decreases along the air flow direction. More specifically, the pair of second panels 312 may be symmetrically disposed and the gap therebetween increasingly narrows toward the front side.

The pair of second panels 312 includes a pair of first portions 312a disposed on both sides of the third panel 313 (as described below) and in parallel to each other. The second panels 312 further include a pair of inclined portions 312b extending from first portions 312a and having an increasingly smaller gap. The second panels 312 further include a pair of second portions 312c extending from the inclined portions 312b and disposed in parallel to each other.

According to the present disclosure, the flow path has a symmetrical geometry and becomes narrower toward the front side. The flow path may advantageously improve flow efficiency of the exhaust air or fumes compared to the related art, and may reduce the noise level.

Here, a connecting surface between the first portion 312a and the inclined portion 312b (or a connecting surface between the inclined portion 312b and the second portion 312c) may be tapered or rounded, thereby forming an air discharge flow path offering enhanced ventilation efficiency.

The third panel 313 is disposed in the rear of the pair of second panels 312, and may have inlet holes 313aa and 313ab for air flow.

That is, referring to FIG. 3, in the air discharge flow path according to the exemplary embodiment, air may pass through the first inlet port 321, the second inlet ports 311a and to the impellers 411 and 412 (which are described below), and may flow into the inlet holes 313aa and 313ab. The air flow is then discharged to the outside through a flow path formed by the first panel 311, the second panels 312, and the upper cover 100.

The third panel 313 may include the first inlet hole 313aa directing to the first impeller 411, and the second inlet hole 313ab directing to the second impeller 412, thereby effectively enhancing the various air flows.

The third panel 313 may further include a bent portion 313b formed between the first inlet hole 313aa and the second inlet hole 313ab and protruding forward, thereby further enhancing the various air flows.

To prevent the formation of turbulance, the bent portion 313b increasingly narrows toward the front side. For example, the bent portion 313b may have a trapezoidal shape.

The air discharge unit 400 is disposed between the third panel 313 and a rear surface of the housing 100, and allows air to flow into the inlet holes 313aa and 313ab. More specifically, the air discharge unit 400 may include an air discharge motor 410. The impellers 411 and 412 are driven by the air discharge motor 410 and operate to allow air to flow into the inlet holes 313aa and 313ab.

Here, the first impeller 411 is disposed on one side of the air discharge motor 410. The second impeller 412 is disposed on the other side of the air discharge motor 410. Both ends of the first impeller 411 and the second impeller 412 are disposed proximate to second inlet ports 311 a, respectively, thereby allowing air to be pumped from the outside to the inside of the housing 100, to the first panel 311, and to the second panels 312.

According to embodiments of the present disclosure, because the upper duct unit 310 is configured to be narrower toward the front side as described above, the funtional components associated with the duct unit 300 may be arranged in a compact manner as a duct module 600.

Here, the duct module 600 may be disposed on the first panel 311 and include a power source unit 610, a running capacitor 620, a noise filter 630, and a fuse 640. The module 600 further includes the humidity sensor 650 and/or the lighting unit 660.

The power source unit 610 can be connected to wall power and distribute electric power for operating the cooking unit 200 or the duct unit 300. The power source unit 610 may be disposed on the first panel 311 located outside one of the first horizontal portions 312a.

The running capacitor 620 (also commonly referred to as a "starting condenser") is used to provide the initial power for activating the air discharge motor 410. The running capacitor 620 may be disposed on the first panel 311 outside one of the inclined portions 312b.

The noise filter 630 serves to reduce noise caused by the operating air discharge motor 410, and to provide related signals. The noise filter 430 may be disposed on the first panel 311 located outside one of the second horizontal portions 312c.

The fuse 640 serves to cut off the electric power supplied from the power source unit 610 when the cooking unit 200 or the air discharge motor 410 become overheated (for example, about 90°C or 150°C). The fuse 640 may be disposed on the first panel 311 outside the other first horizontal portion 312a.

The humidity sensor 650 senses humidity or senses the temperature of water vapor generated from food being cooked in the cooking unit 200. Accordingly, the humidity sensor transmits a signal to a control unit (not illustrated) to control the cooking unit 200 or generates a signal for turning on and off the air discharge motor 410.

The humidity sensor 650 may be disposed on the upper side of the cooking unit 200. The duct module 600 may be disposed on the first panel 311 outside the other inclined portion 312b and the other second portion 312c.

To facilitate the humidity sensor 650 functioning properly, the microwave oven may further include a fourth panel 314 disposed on the first panel 311. The combination of the fourth panel 314, the other inclined portion 312b, and the other second portion 312c define a symmetric region. The humidity sensor 650 may be disposed within this region.

Referring to FIGs. 3 and 4, the lighting unit 660 is disposed on a lower surface of the first panel 311, and allows the user to observe the interior of the cooking unit 200 without opening the door.

Because the components associated with operating the duct unit are modularized and integrated onto the first panel 311, the related assembly tolerance is advantageously reduced, which can improve manufacturing productivity. The reduced assembly tolerance requirements may also facilitate development of over-the-range microwave ovens of smaller sizes.

The filter unit 500 may be disposed on the front side of the pair of second panels 312, and more specifically, on the second portion 312c. The filter unit 500 may be a charcoal filter and can serve to filter air before it is discharged outside. The filter unit 500 may be detachable.

An exemplary method of using the over-the-range microwave oven design according to an embodiment of the present disclosure will be described below.

First, the air discharge unit 400 is activated when a user provides input through the input means associated with the microwave oven, e.g., the buttons, the touch panel, or the dial disposed on the control panel 220.

Then, the air discharge motor 410 is activated once the external electric power is supplied. The motor 410 drives the impellers 411 and 412 to rotate, and thereby the outside air is drawn to the oven from the first inlet port 321 of the lateral side housing. The drawn air flows into the impellers 411 and 412 through the second inlet ports 311 disposed on the first panel 311.

Thereafter, air flow exits the impellers 411 and 412 at a high speed and enters into a duct through the inlet holes 313aa and 313ab of the third panel 313. The duct is formed by the housing 100, the first panel 311, and the second 312,.

In this example, the bent portion 313b formed on the third panel 313 guides the air flow toward the front side and can advantageoulsy prevent the formation of turbulent flow from air exitting the impellers 411 and 412. Because the second panels 312 have a symmetric geometry and form an increasingly narrower gap, air flow can be quickly discharged to the outside.

The filter is disposed between the second portions 312c and at the narrowest location of the flow path, thereby effectively capturing and filtering contaminants.

That is, by the operation of the air discharge unit 400, hot air or fumes around a gas or electric range may be discharged or air flowing by a drive unit of a microwave oven may be discharged through the upper duct unit 300. The upper duct unit 300 is disposed between the housing 100 and the cooking unit 200 and serves as a flow path. The upper duct unit includes the first panel 311 disposed on the upper side of the cooking unit 200, the pair of second panels 312 disposed between the first panel 311 and the housing 100. The second panels are disposed symmetrically and a gap therebetween decreases toward the front side. The upper duct unit 300 further includes the third panel 313 disposed in the rear of the pair of second panels 312 and having the inlet holes 313aa and 313ab for air flow.

Embodiments of the present disclosure employ an air discharge unit 400 disposed on the rear side and configured to guide air from the rear side toward the front side. The air discharge unit 400 includes a symmetric flow path which is increasingly narrower toward the discharge port to further increase the aforementioned effects.

## Claims

1. An over-the-range microwave oven comprising:
a housing (100) defining an exterior;
a cooking unit (200) disposed in the housing (100);
a duct unit (300) disposed in the housing (100);
a first panel (311) forming a bottom surface of the duct unit (300);
a pair of second panels (312) disposed on two sides of the first panel (311) and forming lateral side surfaces of the duct unit (300);
**characterized by**
an integrated duct module (600) disposed on the first panel (311) and comprising a plurality of electrical components associated with the duct unit (300), wherein the duct unit (300) comprises: an upper duct unit (310) disposed between the housing (100) and the cooking unit (200) and disposed on an upper side of the cooking unit (200), wherein the pair of second panels (312) are disposed between the first panel (311) and the housing (100), wherein an interval gap between the pair of second panels (312) decreases along an air flow direction, and wherein further the duct module (600) is disposed outside the pair of second panels (312);
a third panel (313) disposed on the rear of the pair of second panels (312) and comprising an air inlet hole (313aa, 313ab), wherein the pair of second panels (312) comprise:
a pair of first portions (312a) respectively disposed on both sides of the third panel (313) and in parallel to each other;
a pair of inclined portions (312b) respectively extending from the pair of first portions (312a), wherein a gap between the pair of inclined portions (312b) gradually decreases; and
a pair of second portions (312c) respectively extending from the pair of inclined portions (312b) and disposed in parallel to each other, and
wherein the integrated duct module (600) comprises:
a power source unit (610) disposed on the first panel (311) outside one of the pair of first portions (312a);
a running capacitor (620) disposed on the first panel (311) outside one of the pair of inclined portions (312b);
a noise filter (630) disposed on the first panel (311) outside one of the pair of second portions (312c); and
a fuse (640) disposed on the first panel (311) outside another one of the pair of first portions (312a).

2. The over-the-range microwave oven of Claim 1, **characterized in that** the pair of second panels (312c) are disposed symmetrically to each other.

3. The over-the-range microwave oven of Claim 1, **characterized in that** the integrated duct module (600) comprises a humidity sensor (650) disposed on the first panel (311) outside another one of the pair of inclined portions (312b) and another one of the pair of second portions (312c).

4. The over-the-range microwave oven of Claim 3 further **characterized by:**
a fourth panel (314) disposed on the first panel (311), wherein a region formed by a combination of the fourth panel (314), the another one of the pair of inclined portions (312b), and the another one of the pair of second portions (312c) is symmetric, and
wherein the humidity sensor (650) is disposed within the region.

5. The over-the-range microwave oven of Claim 1, **characterized in that** the integrated duct module (600) further comprises a lighting unit (660) disposed on a lower surface of the first panel (311).

6. The over-the-range microwave oven of Claim 1 further **characterized by** an air filter (500) disposed on the pair of second portions (312b).

7. The over-the-range microwave oven of Claim 1, further **characterized by:**
an air discharge unit (400) disposed between the third panel (313) and a rear surface of the housing (100), where the air discharge unit (400) is configured to drive air into the duct unit (300).

8. The over-the-range microwave oven of Claim 7, **characterized in that** the air discharge unit (400) comprises an air discharge motor (410) and an impeller assembly (411, 412) driven by the air discharge motor (410), and wherein the impeller assembly (411, 412) is configured to pump air into the duct unit (300).

9. The over-the-range microwave oven of Claim 8, **characterized in that** the third panel (313) comprises a first inlet hole (313aa) and a second inlet hole (313ab), and wherein the impeller assembly comprises: a first impeller (411) disposed on a first side of the air discharge motor (410) and configured to pump air through the first inlet hole (313aa); and a second impeller (412) disposed on a second side of the air discharge motor (410) and configured to pump air through the second inlet hole (313ab).

10. The over-the-range microwave oven of Claim 9, **characterized in that** the third panel (313) further comprises a bent portion (313b) protruding forward between the first inlet hole (313aa) and the second inlet hole (313ab).

## Patentansprüche

1. Ein Mikrowellenherd mit integriertem Dunstabzug, umfassend
ein Gehäuse (100), das ein äußeres Erscheinungsbild definiert;
eine in dem Gehäuse (100) angeordnete Gareinheit (200);
eine in dem Gehäuse (100) angeordnete Leitungseinheit (300),
eine erste Platte (311), die eine Bodenfläche der Leitungseinheit (300) bildet, und
ein Paar zweiter Platten (312), die an zwei Seiten der ersten Platte (311) angeordnet sind und laterale Seitenflächen der Leitungseinheit (300) bilden,
**gekennzeichnet durch**
ein an der ersten Platte (311) angeordnetes integriertes Leitungsmodul (600), das eine Vielzahl von elektrischen Komponenten umfasst, die der Leitungseinheit (300) zugeordnet sind, wobei die Leitungseinheit (300) umfasst: eine obere Leitungseinheit (310), die zwischen dem Gehäuse (100) und der Gareinheit (200) angeordnet und an einer Oberseite der Gareinheit (200) angeordnet ist, wobei das Paar zweiter Platten (312) zwischen der ersten Platte (311) und dem Gehäuse (100) angeordnet ist, wobei ein Zwischenraum zwischen dem Paar zweiter Platten (312) sich entlang einer Luft-Strömungsrichtung verjüngt, und wobei das Leitungsmodul (600) ferner außerhalb des Paars zweiter Platten (312) angeordnet ist,
eine dritte Platte (313), die an der Rückseite des Paars zweiter Platten (312) angeordnet ist und eine Luft-Einlassöffnung (313aa, 313ab) umfasst, wobei das Paar zweiter Platten (312) umfasst:
ein Paar erster Abschnitte (312a), die jeweils an beiden Seiten der dritten Platte parallel zueinander angeordnet sind,
ein Paar geneigter Abschnitte (312b), die sich jeweils von dem Paar erster Abschnitte (312a) aus erstrecken, wobei ein Spalt zwischen dem Paar geneigter Abschnitte (312b) sich schrittweise verjüngt, und
ein Paar zweiter Abschnitte (312c), die sich jeweils von dem Paar geneigter Abschnitte (312b) aus erstrecken und parallel zueinander angeordnet sind, und
wobei das integrierte Leitungsmodul (600) umfasst:
eine Stromquellen-Einheit (610), die an der ersten Platte (311) außerhalb eines des Paars erster Abschnitte (312a) angeordnet ist,
einen Betriebskondensator (620), der an der ersten Platte (311) außerhalb eines des Paars geneigter Abschnitte (312b) angeordnet ist,
einen Geräuschfilter (630), der an der ersten Platte (311) außerhalb eines des Paars zweiter Abschnitte (312c) angeordnet ist, und
eine Sicherung (640), die an der ersten Platte (311) außerhalb eines anderen des Paars erster Abschnitte (312a) angeordnet ist.

2. Der Mikrowellenherd mit integriertem Dunstabzug gemäß Anspruch 1, **dadurch gekennzeichnet, dass** das Paar zweiter Platten (312c) symmetrisch zueinander angeordnet ist.

3. Der Mikrowellenherd mit integriertem Dunstabzug gemäß Anspruch 1, **dadurch gekennzeichnet, dass** das integrierte Leitungsmodul (600) einen Feuchtigkeitssensor (650) umfasst, der an der ersten Platte (311) außerhalb eines anderen des Paars geneigter Abschnitte (312b) und außerhalb eines anderen des Paars zweiter Abschnitte (312c) angeordnet ist.

4. Der Mikrowellenherd mit integriertem Dunstabzug gemäß Anspruch 3, **gekennzeichnet durch**
eine vierte Platte (314), die an der ersten Platte (311) angeordnet ist, wobei ein durch eine Kombination der vierten Platte (314), des anderen des Paars geneigter Abschnitte (312b) und des anderen des Paars zweiter Abschnitte (312c) gebildeter Bereich symmetrisch ist, und
wobei der Feuchtigkeitssensor (650) in dem Bereich angeordnet ist.

5. Der Mikrowellenherd mit integriertem Dunstabzug gemäß Anspruch 1, **dadurch gekennzeichnet, dass** das integrierte Leitungsmodul (600) ferner eine Beleuchtungseinheit (660) umfasst, die an einer Unterfläche der ersten Platte (311) angeordnet ist.

6. Der Mikrowellenherd mit integriertem Dunstabzug gemäß Anspruch 1, **gekennzeichnet durch** einen Luftfilter (500), der an dem Paar zweiter Abschnitte (312b) angeordnet ist.

7. Der Mikrowellenherd mit integriertem Dunstabzug gemäß Anspruch 1, **gekennzeichnet durch** eine Luft-Auslasseinheit (400), die zwischen der dritten Platte (313) und einer Rückfläche des Gehäuses (100) angeordnet ist, wobei die Luft-Auslasseinheit (400) so ausgebildet ist, dass sie Luft in die Leitungseinheit (300) treibt.

8. Der Mikrowellenherd mit integriertem Dunstabzug gemäß Anspruch 7, **dadurch gekennzeichnet, dass** die Luft-Auslasseinheit (400) einen Luft-Auslassmotor (410) sowie eine von dem Luft-Auslassmotor (410) angetriebene Lüfterrad-Anordnung (411, 412) umfasst, wobei die Lüfterrad-Anordnung (411, 412) so ausgebildet ist, dass sie Luft in die Leitungseinheit (300) pumpt.

9. Der Mikrowellenherd mit integriertem Dunstabzug gemäß Anspruch 8, **dadurch gekennzeichnet, dass** die dritte Platte (313) eine erste Einlassöffnung (313aa) sowie eine zweite Einlassöffnung (313ab) umfasst, und wobei die Lüfterrad-Anordnung umfasst: ein erstes Lüfterrad (411), das an einer ersten Seite des Luft-Auslassmotors (410) angeordnet und so ausgebildet ist, dass es Luft durch die erste Einlassöffnung (313aa) pumpt, und ein zweites Lüfterrad (412), das an einer zweiten Seite des Luft-Auslassmotors (410) angeordnet und so ausgebildet ist, dass es Luft durch die zweite Einlassöffnung (313ab) pumpt.

10. Der Mikrowellenherd mit integriertem Dunstabzug gemäß Anspruch 9, **dadurch gekennzeichnet, dass** die dritte Platte (313) ferner einen gebogenen Abschnitt (313b) umfasst, der zwischen der ersten Einlassöffnung (313aa) und der zweiten Einlassöffnung (313ab) nach vorne hervorsteht.

## Revendications

1. Four à micro-ondes à hotte intégrée comprenant :
un boîtier (100) définissant un extérieur ;
une unité de cuisson (200) disposée dans le boîtier (100) ;
une unité de conduit (300) disposée dans le boîtier (100) ;
un premier panneau (311) formant une surface inférieure de l'unité de conduit (300) ;
une paire de deuxièmes panneaux (312) disposée des deux côtés du premier panneau (311) et formant les surfaces latérales de l'unité de conduit (300) ;
**caractérisé par** :
un module de conduit intégré (600) disposé sur le premier panneau (311) et comprenant une pluralité de composants électriques associés avec l'unité de conduit (300), dans lequel l'unité de conduit (300) comprend : une unité de conduit supérieure (310) disposée entre le boîtier (100) et l'unité de cuisson (200) et disposée sur un côté supérieur de l'unité de cuisson (200), dans lequel la paire de deuxièmes panneaux (312) est disposée entre le premier panneau (311) et le boîtier (100), dans lequel un espace d'intervalle entre la paire de deuxièmes panneaux (312) diminue le long d'une direction d'écoulement d'air, et dans lequel en outre le module de conduit (600) est disposé à l'extérieur de la paire de deuxièmes panneaux (312) ;
un troisième panneau (313) disposé à l'arrière de la paire de deuxièmes panneaux (312) et comprenant un trou d'air (313aa, 313ab), dans lequel la paire deuxièmes panneaux (312) comprend :
une paire de premières parties (312a) respectivement disposées des deux côtés du troisième panneau (313) et parallèles entre elles ;
une paire de parties inclinées (312b) s'étendant respectivement à partir de la paire de premières parties (312a), dans lequel un espace entre la paire de parties inclinées (312b) diminue progressivement ; et
une paire de secondes parties (312c) s'étendant respectivement à partir de la paire de parties inclinées (312b) et disposées parallèlement entre elles, et
dans lequel le module de conduit intégré (600) comprend :
une unité de source de puissance (610) disposée sur le premier panneau (311) à l'extérieur de l'une de la paire de premières parties (312a) ;
un condensateur de marche (620) disposé sur le premier panneau (311) à l'extérieur de l'une de la paire de parties inclinées (312b) ;
un filtre de bruit (630) disposé sur le premier panneau (311) à l'extérieur de l'une de la paire de secondes parties (312c) ; et
un fusible (640) disposé sur le premier panneau (311) à l'extérieur de l'autre de la paire de premières parties (312a).

2. Four à micro-ondes à hotte intégrée selon la revendication 1, **caractérisé en ce que** la paire de deuxièmes panneaux (312c) sont disposés symétriquement l'un par rapport à l'autre.

3. Four à micro-ondes à hotte intégrée selon la revendication 1, **caractérisé en ce que** le module de conduit intégré (600) comprend un capteur d'humidité (650) disposé sur le premier panneau (311) à l'extérieur de l'autre de la paire de parties inclinées (312b) et d'une autre de la paire de secondes parties (312c).

4. Four à micro-ondes à hotte intégrée selon la revendication 3, **caractérisé en outre par** :
un quatrième panneau (314) disposé sur le premier panneau (311), dans lequel une région formée par une combinaison composée du quatrième panneau (314), de l'autre de la paire de parties inclinées (312b) et de l'autre de la paire de secondes parties (312c), est symétrique, et
dans lequel le capteur d'humidité (650) est disposé à l'intérieur de la région.

5. Four à micro-ondes à hotte intégrée selon la revendication 1, **caractérisé en ce que** le module de conduit intégré (600) comprend en outre une unité d'éclairage (660) disposée sur une surface inférieure du premier panneau (311).

6. Four à micro-ondes à hotte intégrée selon la revendication 1, **caractérisé en outre par** un filtre à air (500) disposé sur la paire de secondes parties (312b).

7. Four à micro-ondes à hotte intégrée selon la revendication 1, **caractérisé en outre par** :
une unité de décharge d'air (400) disposée entre le troisième panneau (313) et une surface arrière du boîtier (100), où l'unité de décharge d'air (400) est configurée pour entraîner l'air dans l'unité de conduit (300).

8. Four à micro-ondes à hotte intégrée selon la revendication 7, **caractérisé en ce que** l'unité de décharge d'air (400) comprend un moteur de décharge d'air (410) et un ensemble de roues (411, 412) entraîné par le moteur de décharge d'air (410), et dans lequel l'ensemble de roues (411, 412) est configuré pour pomper l'air dans l'unité de conduit (300).

9. Four à micro-ondes à hotte intégrée selon la revendication 8, **caractérisé en ce que** le troisième panneau (313) comprend un premier trou d'entrée (313aa) et un second trou d'entrée (313ab), et dans lequel l'ensemble de roues comprend : une première roue (411) disposée sur un premier côté du moteur de décharge d'air (410) et configurée pour pomper l'air à travers le premier trou d' entrée (313aa) ; et une seconde roue (412) disposée sur un second côté du moteur de décharge d'air (410) et configurée pour pomper l'air à travers le second trou d'entrée (313ab).

10. Four à micro-ondes à hotte intégrée selon la revendication 9, **caractérisé en ce que** le troisième panneau (313) comprend en outre une partie pliée (313b) faisant saillie vers l'avant entre le premier trou d'entrée (313aa) et le second trou d'entrée (313ab).
